Europäisches Patentamt

European Patent Office

Office européen des brevets

(19)

(11) Publication number: **0 431 723 A2**

# EUROPEAN PATENT APPLICATION

(12)

(21) Application number: **90304298.4**

(22) Date of filing: **20.04.90**

(51) Int. Cl.⁵: **A63F 9/22**

(30) Priority: **07.12.89 JP 141942/89**

(43) Date of publication of application:
**12.06.91 Bulletin 91/24**

(84) Designated Contracting States:
**BE DE ES FR GB IT LU NL SE**

(71) Applicant: **SNK CORPORATION**
**18-12, Toyotsu-cho**

**Suita-shi, Osaka(JP)**

(72) Inventor: **Hasegawa, Yoshihiko**
**35-12 Higashitoyonaka-cho 5-chome**
**Toyonaka-shi, Osaka(JP)**

(74) Representative: **Burke, Steven David et al**
**R.G.C. Jenkins & Co. 26 Caxton Street**
**London SW1H 0RJ(GB)**

(54) **TV game machine.**

(57) A TV game machine having a connector for detachably connecting a memory cassette having at least non-volatile memories containing a game program, picture data and sound data, a processor for executing the game program for the game while processing the data from the memory cassette based on the instructions of an external control means for giving instructions to the game program. Further, it has a work RAM for temporarily memorizing the progress of the game program, and a con-nector for detachably connecting an IC card including a RAM having a backup power supply. The processor is adapted to save the progress of the game stored in the work RAM in the RAM in the IC card and to read the progress of the game saved in the IC card into the work RAM to allow the game to be resumed from this state.

FIG.1

EP 0 431 723 A2

Xerox Copy Centre

## TV GAME MACHINE

The present invention relates to a TV game machine, specifically a TV game machine in which a game can be resumed.

Today's TV games are becoming more and more sophisticated and complicated and thus require a long time to complete. On the other hand, fatigue will prevent the player from playing a game for a long time. Also, playing a game for so long a time is not desirable from an educational standpoint.

One problem with the TV games currently available is that once the power is cut off, the current status of the game is lost and thus it is impossible to resume the game from the point where the game has been interrupted.

It is an object of the present invention to provide a TV game machine having means for saving data necessary to resume a game.

In order to solve the above problems, the present invention provides a TV game machine comprising a first connecting means for detachably connecting a memory cassette comprising at least non-volatile memories containing a game program, picture data and sound data, a processor for executing the game program for the game while processing the data from the memory cassette based on the instructions of an external control means for giving instructions to the game program, a work RAM for temporarily memorizing the progress of the game program, and a second connecting means for detachably connecting an IC card including a RAM having a backup power supply, the processor being adapted to save the progress of the game stored in said work RAM in the RAM in said IC card and to read the progress of the game saved in said IC card into the work RAM to allow the game to be continued from this state.

Since the IC card has a built-in backup power supply, the progress of a game stored in its RAM will never be lost. This makes it possible to store the progress of the game whenever necessary so that the game can be resumed from the point where it has been interrupted by reading the contents of the IC card.

According to the present invention, by the provision of the IC card capable of saving the progress of a game, even a complicated game which requires a long time to complete can be interrupted at any given point and restarted from the point interrupted. This makes it possible to save time and increase interest in games.

Other features and objects of the present invention will become apparent from the following description taken with reference to the accompanying drawings, in which:

Fig. 1 is a perspective view showing the external appearance of the game machine according to the present invention;

Fig. 2 is an exploded perspective view of the memory cassette;

Fig. 3 is a block diagram of the same showing its structure by way of example;

Fig. 4 is a block diagram of the IC card showing its structure by way of example; and

Fig. 5 is a block diagram of the game machine showing its structure by way of example.

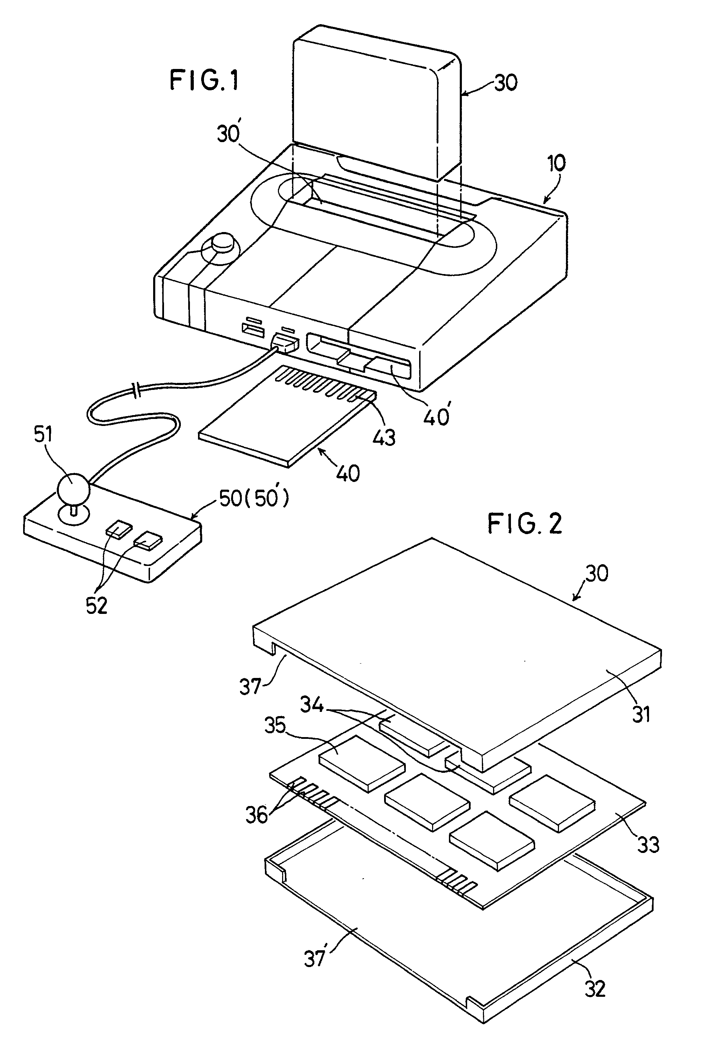

As shown in Fig. 1, a TV game machine 10 is provided with a slot 30' for inserting a memory cassette 30 and a slot 40' for inserting an IC card. External control means in the form of a controller 50 having a joystick 51 and shot switches 52 is connected to the machine 10. An additional controller 50' other than the one shown can be connected thereto. The controller is also provided with RF and RGB output terminals (not shown) besides a power cord.

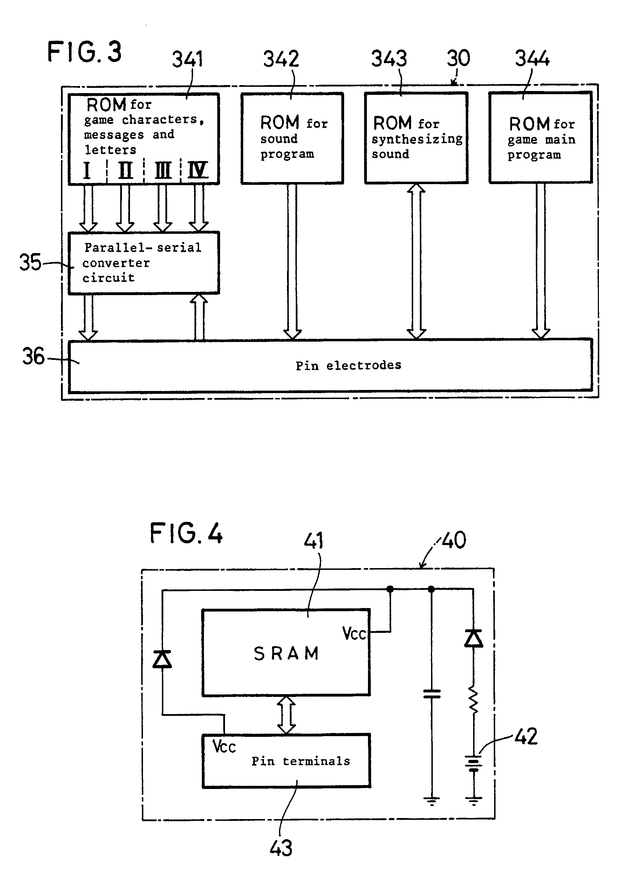

A memory cassette 30 is shown in Figs. 2 and 3 by way of example.

It comprises top and bottom covers 31 and 32 and a board 33. The covers 31 and 32 are bonded together to form a casing with the board 33 housed therein.

On the board 33 are mounted a plurality of non-volatile memories 34 such as ROM's and a parallel-serial converter circuit 35 in the form of an IC chip. They are connected to a group of pin electrodes 36 by means of suitable print wiring (not shown). The group of pin electrodes 36 are exposed at openings 37 and 37' formed in the front sides of the covers 31 and 32.

As shown in Fig. 3, the non-volatile memories 34 comprises a plurality of ROM's 341 containing such picture data as game characters, messages, and letters, a ROM 342 for a sound program, a ROM 343 for synthesizing sound and a ROM 344 for a main program of the game. The picture ROM's 341 are connected to the group of pins 36 through the parallel-serial converter circuit 6. The other ROM's 342, 343 and 344 are also connected to the group of pin electrodes 36.

When the memory cartridge 3 is set in the game machine 10, the group of pin electrodes 36 are connected to an edge connector 11 provided in the slot 30' in the game machine 10 (Fig. 1), allowing data transfer between the cartridge and the game machine 10.

An IC card 40 is shown in Fig. 4 by way of example, in which numeral 41 designates a static RAM for memorizing the progress of the game as parameters necessary to restart the game. Such parameters include the score won by the hero of the game, the present position of the hero, the remaining time (if the game has a time limit), the score of the player, the number of stages reached, etc. though they differ from one game to another, depending upon the kind of game.

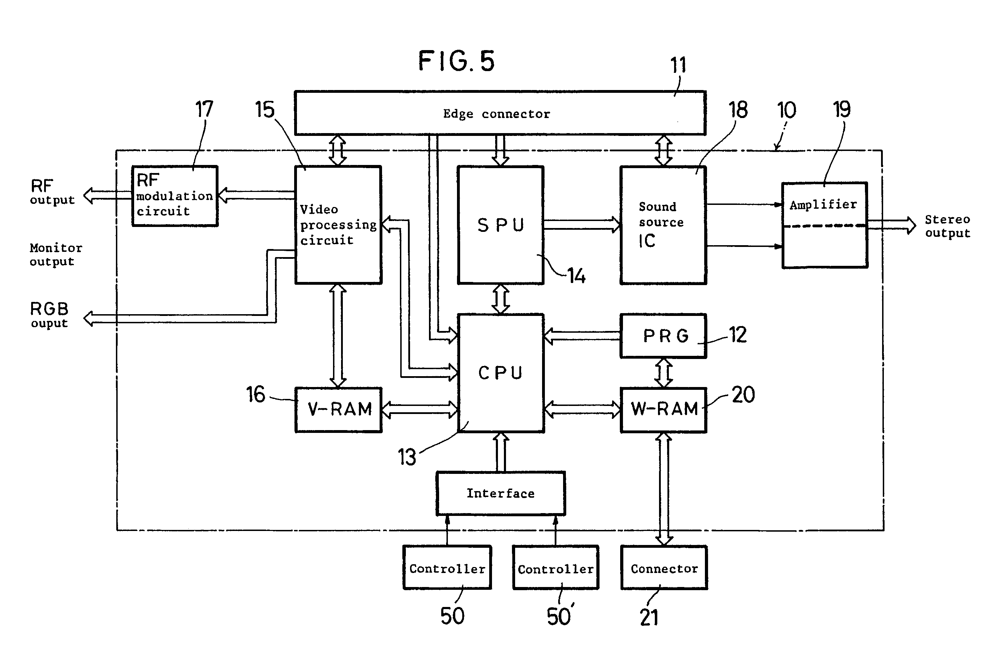

A backup power supply 42 is connected to the static RAM 41. While the game is being played, power is supplied from the game machine 10 through a group of pin terminals 43. When the IC card 40 is inserted in the slot 40' (Fig. 1), the group of pin terminals 43 are connected to a connector 21 (Fig. 5).

Upon start of the game with the memory cassette 30 and the IC card 40 mounted on the game machine 10, the program PRG 12 in the main body will allow a central processing unit 13 (such as 68000 CPU) and a sound processing unit (SPU) 14 (such as Z80 CPU) to gain access to the game main program ROM 344 and the sound program ROM 342, respectively, and to indicate instructions on whether or not to start the game from the beginning, on a display (not shown). The controller 50 is controlled to give instructions on whether or not to start the game from the beginning.

If decided to start the game from the beginning, the main program is executed by CPU 13 upon start of the game by manipulating the controllers 50 and 50' and a video processing circuit 15 and the SPU 14 are controlled. The video processing circuit 15 gains access to the picture ROM's 341 in accordance with the instructions of the main program 13. The picture ROM's contain e.g. 4 x 1024 characters, each character consisting of 16 x 16 dots, each dot consisting of 4 bits. Four 1-megabit ROM's are needed to store this amount of data.

Multicolor representation is, of course, impossible with four-bit per dot. This four-bit per dot information is used only to specify the color storage numbers in a palette stored in RAM's (not shown) to which the video processing circuit 15 can gain access. A V-RAM 16 contains a table showing in a one-to-one relation the number and position of each character on the monitor as well as an area for sprite. The video processing circuit takes out the characters in the ROM's 341 while gaining access to the corresponding portions in the RAM's to give colors to the characters, which are then given as RGB signals or as RF signals after passing them through an RF modulation circuit 17.

In any of the above-described examples, if it is desired to interrupt the game at any point thereof and restart the game from the point interrupted, the controller 50 is operated to let the PRG 12 write the progress of the game stored in the work RAM 20 into the RAM 41 in the IC card.

There are provided four ROM's 341 in the memory cassette 30 each having 32-bit data buses. On the other hand, the video processing circuit 15 has a dot serial output. For this type of video processor, an 8-bit one is usually sufficient. Thus, according to the present invention, the parallel-serial converter is provided between the ROM's 341 and the video processing circuit 15 (Fig. 3). This leads to a reduction in the number of pins.

The sound processing unit 14 runs the sound program in the ROM 342 as the main program progresses to give sound outputs to an amplifier 19 according to the contents of the sound synthesizing ROM 343 which are memorized as digital information, by actuating a sound IC 18.

Although in the preferred embodiment the IC card 40 is set in the game machine 10 from the beginning of the game, it may be set only when it is desired to save the progress of the game because the game itself can be played without the IC card 40.

The IC card can store the progress of a plurality of games.

**Claims**

1. A TV game machine comprising a first connecting means for detachably connecting a memory cassette comprising at least non-volatile memories containing a game program, picture data and sound data; a processor for executing the game program for said game while processing the data from said memory cassette based on the instructions of an external control means for giving instructions to the game program; a work RAM for temporarily memorizing the progress of said game program; and a second connecting means for detachably connecting an IC card including a RAM having a backup power supply; said processor being adapted to save the progress of the game stored in said work RAM in the RAM in said IC card and to read the progress of the game saved in said IC card into said work RAM to allow the game to be resumed from this state.

2. A games machine including a processor and first memory means storing a games program and games data, the processor being responsive to the operation of a user-operable control means for executing the games program, the machine further comprising non-volatile, writable, second memory means into which the processor is operable to load information relating to the status of the game, whereby the status can be stored while the machine is unpowered, and from which the processor is operable to read said status information to allow the game to be resumed at a later stage.

3. A machine as claimed in claim 2, including a detachable module housing said second memory means.

4. A machine as claimed in claim 2 or claim 3, including a detachable module housing said first memory means.

5. A machine as claimed in any one of claims 2 to 4, the machine further comprising a work memory which is used by the processor throughout the progress of the game and which temporarily memorises said progress, the processor being operable to load information relating to the status of the game into the second memory means by transferring said status information from the work memory to the second memory means.

6. A machine as claimed in any one of claims 2 to 5, wherein the second memory means comprises a volatile memory circuit, and a battery for maintaining the contents of the volatile memory circuit.

FIG.1

30

30'

10

51

50(50')

52

43

40'

40

FIG.2

30

37

34

35

31

36

33

37'

32

## FIG.3

341   342   343   30   344

**ROM** for game characters, messages and letters
I | II | III | IV

**ROM** for sound program

**ROM** for synthesizing sound

**ROM** for game main program

35 — Parallel-serial converter circuit

36 — Pin electrodes

## FIG.4

41   40

SRAM   Vcc

Vcc  Pin terminals

42

43

# FIG. 5

EP 0 431 723 A2